Europäisches Patentamt

**European Patent Office**

Office européen des brevets

(19)

(11) Publication number: **0 103 457**
A2

(12)

# EUROPEAN PATENT APPLICATION

(21) Application number: **83305187.3**

(22) Date of filing: **07.09.83**

(51) Int. Cl.³: **G 06 K 9/00**

(30) Priority: **10.09.82 US 416789**

(43) Date of publication of application: **21.03.84**
**Bulletin 84/12**

(84) Designated Contracting States: **DE FR GB IT SE**

(71) Applicant: **WESTINGHOUSE ELECTRIC CORPORATION, Westinghouse Building Gateway Center, Pittsburgh Pennsylvania 15235 (US)**

(72) Inventor: **Shum, Lanson Yatsang, 2500 Alydar Drive, Wexford Pennsylvania (US)**

(74) Representative: **van Berlyn, Ronald Gilbert, 23, Centre Heights, London, NW3 6JG (GB)**

(54) **An improved optical parts recognition technique.**

(57) Apparatus for optically recognizing the size and configuration of predetermined workpieces uses a technique of superimposition and comparison of a reference (two-dimensional) image with an image of a workpiece object formed by a lens. A negative transparency 42 processed from photographic film is employed in combination with an optical lens to provide recognition of the orientation and configuration of an object within the field of view of the lens. The lens superimposes an image of an object onto the negative transparency to check the degree of correspondence. A light-responsive photocell develops an output signal proportional to the degree of correspondence and indicative of the light level transmitted through the negative transparency. The absence of transmitted light indicates correspondence between the object having a known configuration and orientation and the transparent portion image of the negative transparency.

1

# AN IMPROVED OPTICAL PARTS RECOGNITION TECHNIQUE

This invention generally relates to optical apparatus for image recognition, and more particularly relates to such apparatus which uses an optical device which uses an image comparison technique.

The continuing efforts to implement totally unattended assembly operations employing automatic assembly machines and industrial robots has placed increasing demands on equipment associated with parts feeders to identify the quality, configuration and orientation of parts being presented for the assembly operation. Failure to identify and reject a damaged part or one that is improperly positioned, may interrupt the assembly process and cause expensive down time. The need to ensure accurate identification of orientation and quality of parts is presently being met through vision systems typically utilizing a photodiode array camera and a digital computer. While this approach has proven to be generally successful, the cost and sophistication associated with it cannot be justified in many applications.

This invention provides an image recognizing apparatus without requiring a photodiode array camera as in certain prior art arrangements.

The invention in its broad form comprises an optical-type object recognition apparatus, comprising an image mask consisting of a negative transparency having a light transparent image corresponding to a two-dimensional view an object of a predetermined configuration and orientation; optical lens means associated with said image mask and mounted to superimpose the image of an object which is to be recognized and is brought within the field of view of the optical lens means onto said image mask; illumination means for illuminating said object within the field of view of said optical lens means; and light-responsive transducer means responding to the level of light transmitted through said transparent portion of said image mask when the image of the object within the field of view of the optical lens means is superimposed onto said image mask, said light-responsive transducer means generating an output signal indicative of a degree of correlation between the configuration and orientation of the object and that of the transparent portion of the image mask.

A preferred embodiment described herein teaches a novel image comparison technique utilizing a conventional photographic camera for generating an image comparison mask, or negative transparency, and subsequently using the camera in combination with the image mask for real time image comparison to identify the presence of objects and the orientation thereof. The image mask, or negative, can be treated to remove irrelevant features of the object, or emulsion can be removed to enhance the sensitivity of a particular feature of the object.

The workpiece or object to be monitored is positioned within the field of view of a lens system which is used to superimpose the object image onto the image mask. A light-responsive device, i.e., photocell, detects the light level integrated over the entire field of view. The light level determines how closely the object image corresponds to the image mask. This technique offers a very flexible and inexpensive approach for real time recognition of object configuration and orientation.

A more detailed understanding of the invention may be had from the following description of a preferred embodiment described hereinafter, to be understood in conjunction with the following drawing in which:

Figure 1 is a schematic illustration of a preferred embodiment of the invention;

Figure 2 is a simplified variation of the embodiment of Figure 1;

Figure 3 is a schematic illustration of an embodiment of the invention employing both a positive and negative image mask to provide further differentiation of object configuration and orientation; and

Figure 4 is a schematic illustration of the embodiment of Figure 3 in a single housing.

In an application where a single workpiece is to be viewed for recognition, the implementation of the novel image comparison technique can be realized through the use of a single negative transparency, or image mask, produced by conventional photographic film processing, in combination with a lens system for superimposing an object image onto the image mask. A light-responsive transducer develops an output signal indicative of the degree to which the superimposed object corresponds to the transparent area of the image mask.

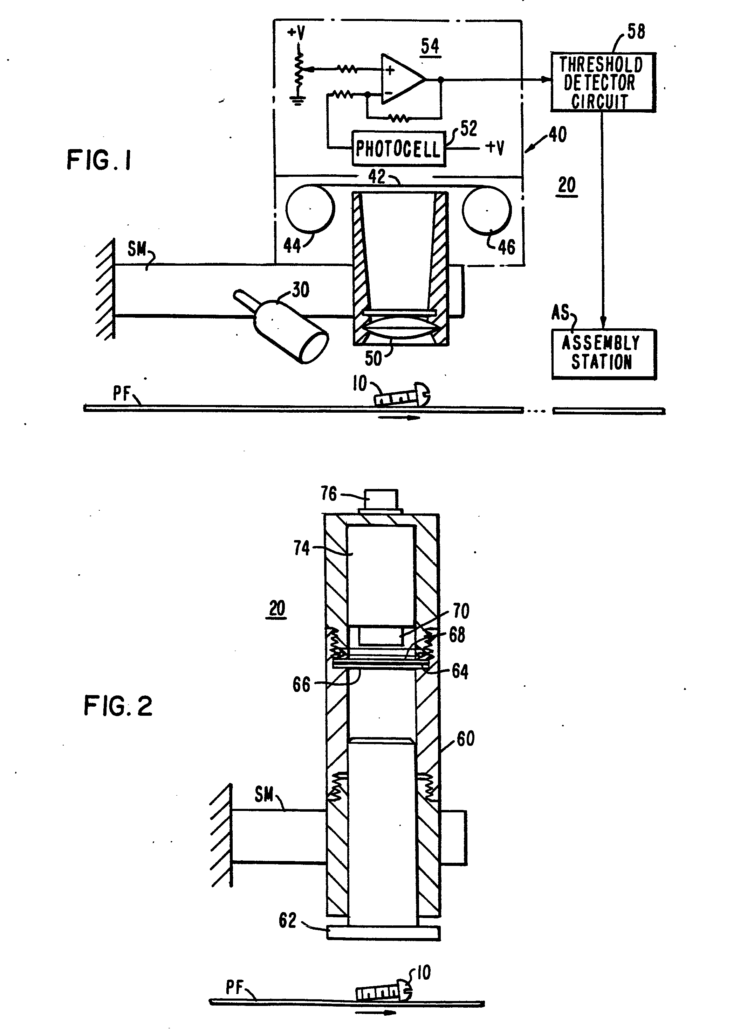

An implementation of this simplified embodiment of the invention is schematically illustrated in Fig. 1. The single workpiece to be viewed for recognition and orientation is represented by the screw 10. The screw 10 is presented beneath the object recognition apparatus 20 by a vibratory parts feeder, or parts conveyor member, PF, prior to being accepted or rejected for use in an automatic assembly station AS.

The object recognition apparatus 20, which is supported at a fixed location above the parts feeder PF by a support member SM includes a light source 30 and an object verification device 40. The object verification device 40 includes a negative transparency image mask 42 supported by film holders 44 and 46 in a plane positioned at a distance above the object 10 corresponding to the plane and distance of the photographic film which was exposed by a camera from which the negative transparency image mask 42 was developed. An optical lens arrangement 50, which corresponds to the optical lens system of the camera used to produce the photographic image from which the negative transparency image mask 42 was developed, is employed to optically transmit the image of the object brought into the field of view of the apparatus 40 by the parts feeder PF and superimpose the object image onto the negative mask 42. The light transparent portion of the negative mask 42 establishes both a predetermined object configuration, i.e., the outline of a screw, and a predetermined orientation of the object. A photocell 52 responds to the light passing through the transparent portion of the negative image mask 42 when an object 10 is within the field of view of the lens 50. The electrical signal developed by the photocell 52 is supplied to an amplifier circuit 54 which develops an electrical output signal. This output signal represents the light value integrated over the entire field of view.

When an object 10 of a configuration and orientation identical to that of the transparent portion of the negative image mask 42 passes within the field of view of the lens 50 and is superimposed optically upon the negative image mask 42, the photocell 52 will detect the lowest light value integrated over the entire field of view. In other words, the projected image of the object 10 will "fill" the transparent portion of the negative image mask 42 and essentially no light will reach the photocell 52. Under these conditions, the amplifier circuit 54 develops the highest positive output voltage condition, or object recognition value. This indication, as represented by the output signal from the amplifier circuit 54, is available to alert the assembly station AS that an object of proper configuration and orientation is being supplied. A misorientation of the object 10 results in the transmission of a measurable amount of light through the negative image mask 42 thus resulting in less of a positive voltage output signal from the amplifier circuit 54.

A threshold detector circuit 58 responds to the level of the output signal of the amplifier circuit 54 by alerting the assembly station AS as to whether the object to be supplied as of proper configuration and orientation.

A simplified mechanical implementation of the embodiment of Fig. 1 is depicted in the section view of Fig. 2. A cylindrical housing 60 is positioned above the parts feeder PF by a support member SM. An optical lens 62, as described above, is secured within the cylindrical housing 60 and functions to optically superimpose the image of an object positioned within the field of view of the lens 62 onto the negative image mask 64. The image mask 64 is secured between two glass members 66 and 68 in a plane and at a position relative to the parts feeder PF which is identical to the plane and position of the photographic film of the camera that took the object exposure from which the negative image mask 64 was developed. The photocell 70 which is positioned behind the negative image mask is integrally combined with the associated electronics in a package 74 with the electrical connector 76 functioning to transmit the object recognition information from the package 72 to a remote display or control location, such as the assembly station AS.

In the above-described simplified embodiment of the invention employing a negative transparency as an image mask, the response to the presence of an object within the field of view of the optical recognition device is analogous to the operation of a low pass filter.

While the simplified embodiment of Fig. 1 is suitable for a parts feeder application wherein the same part size and configuration is to be employed, the embodiment of Fig. 1 lacks the capability of distinguishing between objects which, while they may be sufficient to totally block the transmission of light through the negative image mask, are in themselves of different size and configuration, i.e., two different sizes of screws.

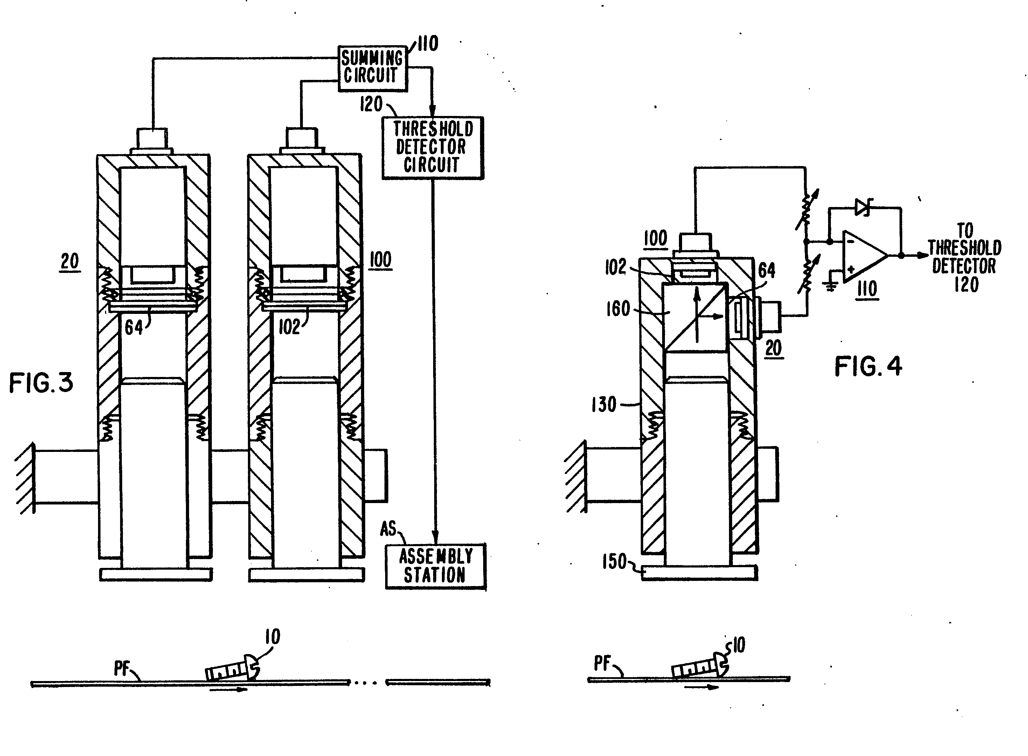

In an effort to improve the recognition capability of the embodiment illustrated in Figs. 1 and 2, an optical high pass device is included in the embodiment of Fig. 3. This is represented by a second optical recognition device 100 incorporating a contact print, or positive transparency, made from the negative transparency positioned within the "low pass" optical recognition device 20. The combination of the "low pass" optical recognition device 20 and the "high pass" optical recognition device 100 effectively produces a "bandpass" filtering arrangement more accurately representing the image of an acceptable object configuration and orientation.

The object recognition device 100 is comparable to the object recognition device 20 with the exception being that a positive transparency image mask 102 is substituted for the negative transparency image mask 64. A summing circuit 110 combines the output signals developed by the respective optical recognition devices 20 and 100 and supplies the resulting signal to the threshold detector circuit 120. The threshold detector circuit 120 responds to an input signal corresponding to an object configuration and orientation which results in a minimum light transmission through the negative transparency image mask 64 and a maximum light transmission through the positive transparency image mask 102 by developing an output display and control signal indicative of the recognition of an object of desired configuration and orientation.

The combination of a negative transparency image mask and a positive transparency image mask significantly increases the object recognition reliability. The presence of an object which is significantly larger in area than the object from which the image masks were made, when superimposed upon the negative transparency mask, will produce a minimum transmission of light through the negative transparency resulting in an erroneous object recognition output signal from the corresponding photocell.

7

The same large object, however, will project a correspondingly large image which, when superimposed upon the positive transparency, will cause less than a maximum amount of light to be transmitted through the positive transparency resulting in an output signal from the corresponding photocell indicative of the presence of an object other than that from which the positive transparency image mask was made. The reverse set of responses will occur when an object smaller than the object from which the negative and positive transparency image mask were made is positioned within the field of view of the object recognition devices 20 and 100.

The dual object recognition device configuration of Fig. 3 can be simplified through the use of a beam splitter, as illustrated schematically in Fig. 4. A negative transparency image mask 64 and a positive transparency image mask 102 are positioned within a housing 130 and a single optical lens 150 functions to superimpose the image of an object within its field of view simultaneously on both the negative transparency image mask 64 and the positive transparency image mask 102 through the use of the beam splitter element 160. As described above, the signals developed by the photo cells associated with each of the image masks are combined in a summing amplifier circuit 110.

0103457

8

CLAIMS:

1. An optical-type object recognition apparatus, comprising:

an image mask consisting of a negative transparency having a light transparent image corresponding to a two-dimensional view an object of a predetermined configuration and orientation;

optical lens means associated with said image mask and mounted to superimpose the image of an object which is to be recognized and is brought within the field of view of the optical lens means onto said image mask;

illumination means for illuminating said object within the field of view of said optical lens means; and

light-responsive transducer means responding to the level of light transmitted through said transparent portion of said image mask when the image of the object within the field of view of the optical lens means is superimposed onto said image mask, said light-responsive transducer means generating an output signal indicative of a degree of correlation between the configuration and orientation of the object and that of the transparent portion of the image mask.

2. Apparatus as claimed in claim 1 wherein said image mask is a negative transparency processed from photographic film exposed to an object of said predetermined configuration and orientation.

3. Apparatus as claimed in claim 1 further including an object feeder means for positioning said object within a field of view of said optical lens means.

4. An object recognition apparatus, as in claim 3, including:

a second image mask consisting of a positive transparency having a non-light transparent portion which is identical to the object image configuration and orientation of the first image mask;

optical lens means associated with said second image mask to superimpose the image of an object brought within the field of view of the optical lens means onto said second image mask;

illumination means for illuminating said object within the field of view of said optical lens means;

a first light-responsive transducer means responding to the light transmitted through said first image mask when the image of said object is superimposed onto said first image mask by generating a first output signal indicative of the level of transmitted light;

a second light-responsive transducer means responding to the light transmitted through said second image mask when the image of said object is superimposed onto said second image mask by generating a second output signal indicative of the level of transmitted light; and

circuit means responding to said first and second output signals to determine if the configuration and orientation of the object correspond to the object image of said first and second image masks.

5. Apparatus as claimed in claim 4 wherein said first image mask is a negative transparency processed from photographic film exposed to an object of said predetermined configuration and orientation, and said second image mask is a positive transparency which consists of a contact print made from the negative transparency of said first image mask.

6. Apparatus as claimed in claim 4 further including object feeder means for positioning said object within the field of view of said optical lens means.

7. Apparatus as claimed in claim 4 further including a beam splitter means positioned between said optical lens means and said first and second image mask means to superimpose the image of the object brought within the field of view of the optical lens means onto both the first and second image masks.

a second light-responsive transducer means generating a second output signal indicative of the level of light transmitted by said second image mask when the image of the object within the field of view of the first optical lens means is superimposed onto said second image mask,

an illumination means for illuminating said object within the field of view of said first and second optical lens means; and

circuit means responding to said first and second output signals to determine if the configuration and orientation of the object correspond to the orientation and configuration of the object image of said first and second image masks.

0103457

1/2

FIG. 1

FIG. 2

FIG.3

SUMMING CIRCUIT 110

THRESHOLD DETECTOR CIRCUIT 120

20

64

100

102

ASSEMBLY STATION AS

PF

10

FIG.4

100

102

160

130

150

64

20

TO THRESHOLD DETECTOR 120

110

PF

10

2/2

0103457